# EUROPÄISCHE PATENTSCHRIFT

(11) **EP 0 818 699 B1**
(45) Veröffentlichungstag und Bekanntmachung des Hinweises auf die Patenterteilung: **16.08.2000**
(21) Anmeldenummer: 97111394.9
(22) Anmeldetag: 05.07.1997
(51) Int. Cl.: G02B 21/00

(54) **Optische Nahfeldsonde und Verfahren zu ihrer Herstellung**
Optical near field probe and its method of fabrication
Sonde de détection optique en champ proche et sa méthode de fabrication

(30) Priorität: 12.07.1996 DE 19628141
(43) Veröffentlichungstag der Anmeldung: 14.01.1998
(73) Patentinhaber: INSTITUT FÜR MIKROTECHNIK MAINZ GmbH, 55129 Mainz-Hechtsheim (DE); Omicron Vakuumphysik GmbH, 65232 Taunusstein (DE)
(72) Erfinder: Güthner, Peter, 65326 Aarbergen (DE); Noell, Wilfried, 60329 Frankfurt (DE); Ruf, Alexander, Dr., 01277 Dresden (DE); Mayr, Karsten, 65462 Gustavsburg (DE)
(74) Vertreter: Fuchs Mehler Weiss & Fritzsche

(56) Entgegenhaltungen:
- EP-A- 0 581 217
- WO-A-95/03561
- US-A- 5 294 790
- NOELL W ET AL: "Micromachined aperture probe tip for multifunctional scanning probe microscopy" APPLIED PHYSICS LETTERS, 10 MARCH 1997, AIP, USA, Bd. 70, Nr. 10, ISSN 0003-6951, Seiten 1236-1238, XP002043130

## Beschreibung

Die Erfindung betrifft eine optische Nahfeldsonde mit einem Lichtwellenleiter und mikrotechnisch hergestellter Spitze, die an einem Trägerelement befestigt ist. Die Erfindung bezieht sich auch auf ein Verfahren zur Herstellung einer optischen Nahfeldsonde.

Optische Nahfeldsonden werden in der Rasternahfeldmikroskopie (SNOM) verwendet, wie dies beispielsweise in "Near-field Optics: Light for the world of NANO" in J.Vac.Sci.Technol. B (12) 3, 1994, Seite 1441-1446 beschrieben wird.

Die optische Nahfeldmikroskopie basiert auf der Abtastung einer Oberfläche mit Hilfe einer optischen Apertur, um Auflösungen besser als das Abbé-Limit zu erreichen. Aus App. Optics Vol. 34, Nr. 7, Seite 1215-1228 ist es beispielsweise bekannt, angespitzte Glasfaserenden zu benutzen, die durch Bedampfen mit einer Metallschicht eine kleine Apertur erhalten. Die alleinige optische Signalerfassung besitzt jedoch den Nachteil, daß keine Trennung von topographischen und optischen Effekten möglich ist. Für die Trennung dieser beiden Effekte ist es notwendig, die Glasfaserspitze beim Abtasten auf einen konstanten Abstand von einigen Nanometern zur Probenoberfläche einzustellen, was bei den bekannten Nahfeldsonden aufgrund ihrer Bauweise nur mit erheblichem Justieraufwand möglich ist. Weiterhin besteht ohne Abstandsregelung die Gefahr, daß beim Abrastern die Glasfaserspitze bzw. die Probenoberfläche beschädigt wird.

Um beides zu verbessern, wurde die Scherkraftdetektion entwickelt, die beispielsweise in der US-PS 5,254,854 beschrieben wird. Die Scherkraftdetektion dient als Distanzregelung, um den Abstand zwischen Faserspitze und Probenoberfläche auf einen konstanten Wert einzustellen. Dazu wird das Glasfaserende in der Regel durch erzwungene Schwingungen einer Piezokeramik in konstante Schwingungen parallel zur Probenoberfläche versetzt. Die Schwingung des Glasfaserendes wird in der Nähe der Probenoberfläche gedämpft, wobei diese Dämpfung um so größer ist, je näher die Glasfaserspitze an der Probenoberfläche ist. Um die Dämpfung der Schwingung zu messen, wird das Glasfaserende in der Regel mit einer orthogonal zur Schwingungsebene angebrachten Laserdiode beleuchtet, wobei der sich ändernde Schatten der Glasfaser die Intensität auf einem Fotodetektor moduliert. Diese Intensitätsmodulation entspricht der mechanischen Schwingungsamplitude und dient elektrisch gleichgerichtet als Eingangssignal für einen Regelkreis. Mit einem Signal des Regelkreises wird eine weitere Piezokeramik gesteuert, die den Abstand der Probenoberfläche zum Glasfaserende so lange verschiebt, bis ein extern vorgegebener Sollwert erreicht ist. So läßt sich die Probenoberfläche mit der Spitze abtasten und der Abstand zwischen Spitze und Probe immer auf einen konstanten Wert nachfahren bzw. einstellen.

Hierzu ist es u.a. erforderlich, daß die Nahfeldsonde einerseits eine entsprechend große Winkelfreiheit besitzt, d.h., daß sie ohne großen Justieraufwand an die Probe herangebracht werden kann, und daß sie andererseits möglichst dünn ausgebildet sein sollte, weil die Materialstärke die Dämpfung und damit die Auflösung bestimmt. Ferner ist es wünschenswert die Nahfeldsonden so aufzubauen, daß sie als Massenprodukt herstellbar sind.

Aus der US-PS 5,294,790 ist es bekannt, die optische Nahfeldsonde aus zwei Komponenten, nämlich Glasfasern und Spitzen herzustellen. Der Nachteil der dort beschriebenen Vorrichtung besteht darin, daß die Glasfaser im Abstand zur Membran und damit zur Nahfeldspitze angeordnet ist, so daß ein Zwischenraum vorhanden ist, der mit Lichtverlusten verbunden ist, die nur dadurch vermieden werden können, wenn der Zwischenraum mit einer Linse oder einer Immersionsflüssigkeit ausgefüllt wird. Ferner ist die Halterung der Nahfeldspitze derart voluminös, daß sie für die Scherkraftdetektion nicht einsetzbar ist. Insbesondere ist es nicht ohne einen erheblichen Justieraufwand möglich, die Spitze an die Probenoberfläche anzunähern, weil nur eine Sondenneigung von nur ± 1° bezüglich der Senkrechten zur Probenebene zulässig ist. Bei größerer Sondenneigung würden Randbereiche der Sonde auf der Probenoberfläche aufsitzen. Weiterhin ist das Schwingungsverhalten für die Scherkraftdetektion durch die große Masse der Haltestruktur am Faserende schlecht, d.h. die Sonde besitzt eine geringe Schwingungsgüte.

Aus der US-PS 5,166,520 ist eine Nahfeldsonde bekannt, die jedoch nicht für optische Einsatzzwecke geeignet ist, sondern insbesondere für Leitfähigkeitsmessungen verwendet wird. Zur Herstellung hierfür geeigneter Sonden wird von einer Glaspipette ausgegangen, an deren Ende eine Membran mit einer hohlen Spitze aufgebracht wird. In die hohle Spitze wird beispielsweise ein Elektrolyt eingebracht, der über eine geeignete elektrische Verbindung an eine Nachweiseinrichtung angeschlossen ist. Diese Nahfeldsonde wird unmittelbar auf die Probenoberfläche aufgesetzt, damit das leitfähige Material in der Sondenspitze die Probe kontaktiert. Um Beschädigungen zu vermeiden, muß die Membran so angebracht werden, daß sie auch nach ihrer Befestigung auf der Pipette flexibel und schwingungsfähig ist. Für die Membran und die Spitze werden nichttransparente Materialien verwendet. Derartige Nahfeldsonden können weder für die optische Rasternahfeldmikroskopie noch für die Scherkraftdetektion eingesetzt werden, weil einerseits die Pipette hierfür zu steif ist und andererseits die Membran schwingfähig befestigt ist. Eine Beschädigung der Membran ist leicht möglich.

Aufgabe der Erfindung ist daher eine optische Nahfeldsonde, die nur eine geringe Masse und geringe Lichtverluste aufweist, eine möglichst große Winkelfreiheit besitzt, damit der Justieraufwand beim Einsatz der Nahfeldsonde geringer wird, und deren Schwingungsverhalten über die Eigenschaften des Lichtwellenleiters eingestellt werden kann. Es ist auch Aufgabe der Erfindung, ein Verfahren zur Herstellung einer solchen Nahfeldsonde bereitzustellen, das für die Massenfertigung geeignet ist.

Diese Aufgabe wird mit einer optischen Nahfeldsonde gemäß Patentanspruch 1 gelöst. Das Verfahren ist Gegenstand des Patentanspruchs 14. Vorteilhafte Ausgestaltungen werden in den Unteransprüchen beschrieben.

Das Trägerelement weist lediglich eine mindestens im Bereich der Spitze transparente Membran auf, die auf die Lichtaustrittsfläche des Lichtwellenleiters aufgebracht ist. Die Membran ist somit ohne Zwischenraum vorzugsweise nur über eine Klebstoffschicht mit der Lichtaustrittsfläche des Lichtwellenleiters verbunden, so daß weder eine Immersionsflüssigkeit noch eine Abbildungsoptik zwischen der Spitze und dem Lichtwellenleiter erforderlich ist, um die Lichtverluste gering zu halten.

Dadurch, daß der Lichtwellenleiter aus festem Material besteht, ist die Membran auf dem Lichtwellenleiter fixiert und kann daher nicht ohne weiteres beschädigt werden. Vorzugsweise besteht der Lichtwellenleiter aus einer Glas- oder einer Polymerfaser.

Lichtwellenleiter und Membran mit Spitze können getrennt gefertigt werden, so daß eine Massenfertigung ermöglicht wird. Außerdem wird insgesamt eine kompakte platzsparende Anordnung geschaffen.

Zu dieser kompakten Ausgestaltung der Nahfeldsonde trägt auch bei, daß die Abmessungen der Membran mindestens in einer Richtung in der Membranebene kleiner gleich dem Durchmesser des Lichtwellenleiters sind. In dieser Richtung wird eine große Winkelfreiheit erzielt mit dem Vorteil, daß der Justieraufwand der Nahfeldsonde in der entsprechenden Ebene deutlich geringer wird. Wenn die Membran insgesamt kleiner gleich dem Durchmesser des Lichtwellenleiters ist, wird eine erhebliche Reduzierung des Justieraufwandes erzielt. Die optische Nahfeldsonde kann auch dann noch ohne großen Justieraufwand an die Probe herangebracht werden, wenn sie um ± 10° aus der Senkrechten zur Probenoberfläche geneigt sein sollte.

Wenn die Nahfeldsonde auch für die Scherkraftdetektion eingesetzt werden soll, so steht auch für die jeweilige Schwingungsrichtung und die Schwingungsdetektion insgesamt mehr Platz zur Verfügung.

Ferner beeinflußt die Membran aufgrund ihrer geringen Masse das Schwingungsverhalten der Nahfeldsonde nicht, so daß die Schwingungseigenschaften ausschließlich durch den verwendeten Lichtwellenleiter bestimmt werden. Sonstige Trägerelemente sind nicht vorgesehen, die das Schwingungsverhalten nachteilig beeinflussen könnten oder die Winkelfreiheit der Nahfeldsonde einschränken würden. Man erhält eine Nahfeldsonde mit großer Schwingungsgüte und somit hervorragender topographischer Auflösung.

Die Membran besteht vorzugsweise aus mindestens einer Schicht. Diese Schicht kann ein im Zentrum angeordnetes transparentes Innenmaterial aufweisen, das von einem Außenmaterial umgeben ist, das transparent oder nicht transparent sein kann. Die Dicke der Schicht ist vorteilhafterweise geringer als der Kerndurchmesser des Lichtwellenleiters.

In Abhängigkeit vom Herstellungsverfahren der Nahfeldsonde kann es u.U. notwendig sein, die Membran aus mehreren Schichten unterschiedlicher Materialien herzustellen, die ebenfalls alle mindestens im Bereich der Spitze transparent sein müssen, oder die Membran dicker zu machen als den Kerndurchmesser des Lichtwellenleiters. Im letzten Fall ist es vorteilhaft, wenn die Membranschicht ein Innen- und ein Außenmaterial aufweist, das entsprechend dem Lichtwellenleiter aus einem Kern- und einem Mantelmaterial aufgebaut ist. Hierbei wird man die Abmessungen entsprechend den Abmessungen des Lichtwellenleiters wählen, so daß das aus dem Kern des Lichtwellenleiters austretende Licht unmittelbar in den Kernbereich der Membranschicht eintritt und dadurch keine oder nur geringe Streulichtverluste auftreten können.
Gemäß einer weiteren Ausführungsform kann das Innenmaterial der Membran integraler Bestandteil der Spitze sein.

Gemäß einer weiteren Ausführungsform kann die gesamte Membran integraler Bestandteil der Spitze sein, wobei man im wesentlichen zwei Ausführungsformen unterscheiden muß. Gemäß einer Ausführungsform werden Spitze und Membran vorzugsweise auf mikrotechnischem Wege in einem gemeinsamen Fertigungsschritt hergestellt. Membran und Spitze sind in diesem Fall aus demselben transparenten Material gefertigt.

Die andere Ausführungsform sieht nicht transparente Membrane, vorzugsweise eine Metallmembran vor, die in der Mitte zu einer Spitze geformt ist, in der sich ein Loch befindet. Diese Metallspitze kann hohl oder mit einem transparenten Material ausgefüllt sein.

Zum Justieren der Spitze auf dem Lichtwellenleiter sind optische Verfahren einsetzbar, es besteht aber auch die Möglichkeit, an der Membran und/oder dem Lichtwellenleiter Justierelemente vorzusehen. Insbesondere bei der Herstellung eines integralen Bauteils bietet es sich an, an der der Spitze abgewandten Seite der Membran Justierelemente an- oder einzuformen, die vorzugsweise aus mindestens einer Vertiefung und/oder mindestens einem Vorsprung bestehen. Diese Vertiefungen bzw. Vorsprünge können in entsprechende Justierstrukturen des Lichtwellenleiters eingreifen, die an seiner Lichtaustrittsfläche vorgesehen sind. Beim Zusammenfügen von Membran und Lichtwellenleiter wird dadurch auf einfache Weise die Spitze über dem Kern des Lichtwellenleiters positioniert und justiert.

Es können auch Justierelemente nur an der Membran vorgesehen sein, die entweder nach dem Befestigen der Membran entfernt werden oder die am Außenumfang des Lichtwellenleiters angreifen und diesen zumindest teilweise umfassen.

Gemäß einer weiteren Ausführungsform kann sich die Vertiefung in der Membran bis in das Innere der Spitze erstrecken, wobei diese Vertiefung beispielsweise kegelförmig ausgebildet sein kann. Zur Zentrierung ist dann entsprechend der Kern des Lichtwellenleiters ebenfalls mit einer Spitze versehen, die in diese Vertiefung eingreift.

Um die Spitze beispielsweise austauschen zu können, wird vorzugsweise für die Klebstoffschicht ein Adhäsionsklebstoff verwendet, der ebenfalls transparent sein muß.

Das Verfahren ist dadurch gekennzeichnet, daß ein Lichtwellenleiter aus festem Material verwendet wird, daß mikrotechnisch die Spitze auf einer Membran oder zusammen mit der Membran als integrale Einheit hergestellt wird und daß die Membran mit der Spitze über der Lichtaustrittsfläche des Lichtwellenleiters justiert und anschließend auf der Lichtaustrittsfläche befestigt wird. Diese Justierung kann mit mechanischen oder optischen Mitteln erfolgen.

Zur Justierung der Einheit aus Spitze und Membran mit optischen Mitteln wird diese gemäß einer Ausführungsform zunächst über der Lichtaustrittsfläche positioniert und Licht in den Lichtwellenleiter eingestrahlt, das aus der Lichtaustrittsfläche des Lichtwellenleiters austritt. Das durch die Spitze hindurchtretende Licht wird mit einer entsprechenden optischen Einrichtung erfaßt. Durch gezieltes Verschieben der Membran bzw. des Lichtwellenleiters ändert sich die Intensität des durch die Spitze hindurchtretenden Lichtes. Wenn das Intensitätsmaximum erreicht ist, ist die Spitze optimal bezüglich des Kerns des Lichtwellenleiters justiert. Anschließend werden beide Bauteile miteinander verbunden.

Eine andere Möglichkeit der Justierung sieht vor, daß über der Spitze ein Bildverarbeitungssystem angeordnet ist, wobei man vorzugsweise eine Membran mit einem kleineren oder gleich großen Durchmesser verwendet wie der Durchmesser des Lichtwellenleiters. Membran und Lichtwellenleiter werden so lange gegeneinander verschoben, bis die Membran bzw. die Spitze koaxial zur Lichtaustrittsfläche des Lichtwellenleiters ausgerichtet ist. Anschließend werden Membran und Lichtwellenleiter miteinander verbunden.

Um bei diesen Verfahren die Handhabung der Membran zu erleichtern, ist diese mit Membranstegen versehen, die vorzugsweise über den Rand der Lichtaustrittsfläche des Lichtwellenleiters hinausragen, so daß ein entsprechend großer Bereich zum Erfassen der Membran zur Verfügung steht. Um die Membran von den überstehenden Bestandteilen zu trennen, sind Abriß- oder Sollbruchstellen vorgesehen. Nach dem Verkleben reißt die transparente Membran unter mechanischer Belastung an diesen Stellen, so daß die verklebte Membran nicht über den Durchmesser des Lichtwellenleiters hinausragt und damit die Winkelfreiheit bei der Probenannäherung beeinträchtigen kann.

Anstelle der Verwendung von optischen Verfahren zur Justierung besteht auch die Möglichkeit, mechanische Mittel, d.h. Justierelemente einzusetzen, die an der Membran und/oder dem Lichtwellenleiter vorgesehen sind. Die an der Membran angebrachten Justierelemente können je nach ihrer Ausgestaltung an der Membran verbleiben oder später abgetrennt werden.

Der Lichtwellenleiter kann an der Lichtaustrittsfläche zur Herstellung von mindestens einem Vorsprung und/oder einer Vertiefung geätzt werden. Bei der Herstellung der Membran wird eine entsprechende Vertiefung eingeformt und/oder ein entsprechender Vorsprung angeformt. Beim Zusammenfügen von Membran und Lichtwellenleiter wirken diese Justierstrukturen zur Positionierung der Spitze zusammen. Es ist auch möglich, die Außenkante des Mantels des Lichtwellenleiters beispielsweise durch Polieren abzuschrägen und an der Membran entsprechende schräge Flächen vorzusehen.

Als Lichtwellenleiter wird vorzugsweise eine Glasfaser oder eine Polymerfaser verwendet. Da der Lichtwellenleiter das mechanische Dämpfungsverhalten der Nahfeldsonde bestimmt, ist ein möglichst dünner Lichtwellenleiter wünschenswert. Eine Glasfaser bietet den Vorteil, daß sie z.B. durch Ätzen lediglich im Mantelbereich ausgedünnt werden kann, wobei der Kernbereich in seinem Durchmesser vorzugsweise erhalten bleibt.

Die Membran wird vorzugsweise auf den Lichtwellenleiter aufgeklebt. Auf den Klebstoff kann verzichtet werden, wenn für die Membran ein Material verwendet wird, das lediglich auf die Lichtaustrittsfläche des Lichtwellenleiters aufgelegt zu werden braucht und dort von Adhäsionskräften gehalten wird.

Üblicherweise werden die Membrane aus Siliziumnitrid hergestellt. Es kann auch gemäß einer weiteren Ausführungsform ein Polymerwerkstoff für die Membran verwendet werden. Wenn der Polymerwerkstoff einen niedrigeren Erweichungs- bzw. Schmelzpunkt als der Lichtwellenleiter aufweist, so kann der Lichtwellenleiter auf eine Temperatur oberhalb des Erweichungspunktes des Polymerwerkstoffes erwärmt werden, und anschließend wird die Membran auf die Oberfläche des Lichtwellenleiters aufgelegt. Bei diesem Vorgang wird die der Spitze abgewandte Seite der Polymermembran erweicht bzw. in einem Oberflächenbereich aufgeschmolzen, so daß die Membran auf der Lichtaustrittsfläche des Lichtwellenleiters haftet. Dieses Verfahren kann insbesondere dann zum Einsatz kommen, wenn es sich beim Lichtwellenleiter um Glasfasern handelt.

Beispielhafte Ausführungsformen der Erfindung werden nachfolgend anhand der Zeichnungen näher erläutert.

Es zeigen:
- Figuren 1 bis 3: die Herstellung einer optischen Nahfeldsonde gemäß einer ersten Ausführungsform,
- Figuren 4, 5 und 6: Nahfeldsonden gemäß weiterer Ausführungsformen
- Figur 7: die Justierung der Spitze mittels einer optischen Einrichtung,
- Figuren 8 bis 10: die Herstellung einer Nahfeldsonde gemäß einer weiteren Ausführungsform.
- Figuren 11 bis 17: Nahfeldsonden mit unterschiedlichen Justierstrukturen.

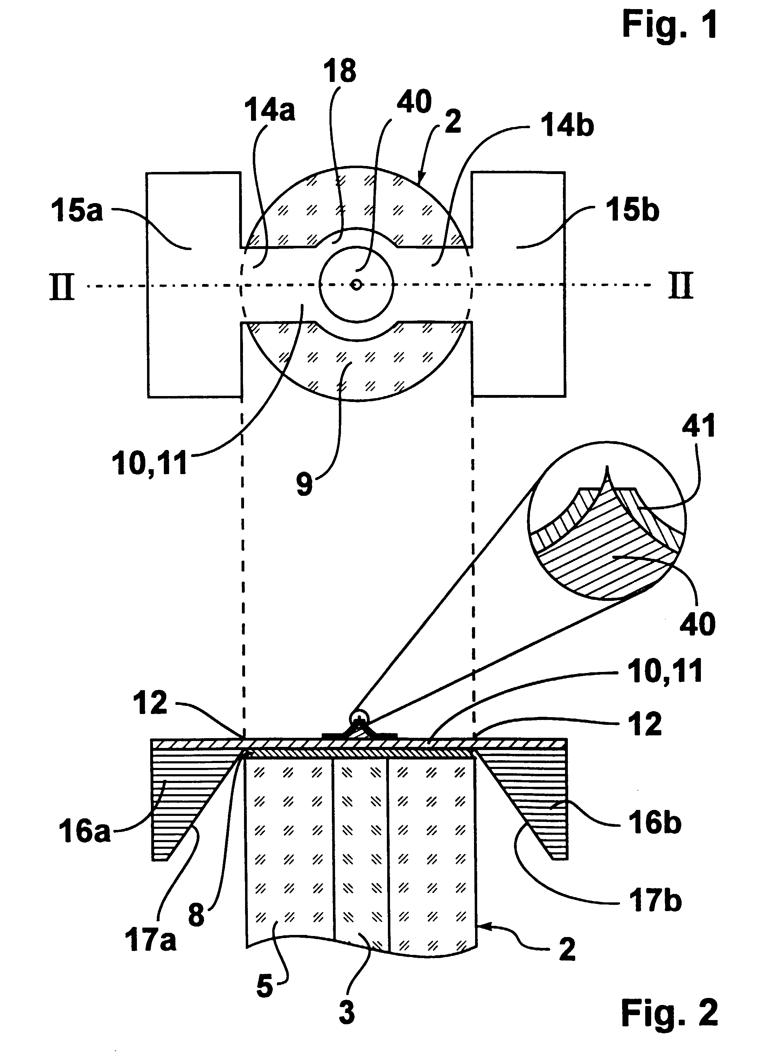

In der Figur 1 ist die Draufsicht auf die Lichtaustrittsfläche 9 eines Lichtwellenleiters 2 dargestellt, über dem als Trägerelement 10 eine transparente Membran 11 angeordnet ist, deren Dicke geringer ist als der Kerndurchmesser der Glasfaser. Die Membran 11, die die Spitze 40 trägt, besitzt ein kreisförmiges Mittelteil 18 mit einem Durchmesser, der geringer ist als der Durchmesser des Lichtwellenleiters 2. Seitlich erstrecken sich Membranstege 14a und 14b, die in Seitenteile 15a und 15b übergehen, die für die Handhabung vorteilhaft sind und nach dem Verkleben der Membran 11 an den beiden Abrißstellen 12 abgetrennt werden.

Wie in der Figur 2, die einen Schnitt durch die in Figur 1 gezeigte Anordnung längs der Linie II-II zeigt, dargestellt ist, ist die Spitze mit einer metallischen Beschichtung 41 versehen, die sich in radialer Richtung über die Oberfläche der Membran 11 erstreckt, so daß im wesentlichen der Bereich des Kernmaterials 3 des Lichtwellenleiters abgedeckt ist. Auf diese Weise wird verhindert, daß aus der Lichtaustrittsfläche 9 austretendes Streulicht an der Spitze 40 vorbei aus der transparenten Membran 11 austreten kann. Die Membran 11 ist mit ihrem Mittelteil 18 und mit ihren Stegen 14a und 14b über eine transparente Klebstoffschicht 8 mit der Lichtaustrittsfläche 9 des Lichtwellenleiters 2 verbunden. Unterhalb der Seitenteile 15a und 15b sind keilförmige Justierelemente 16a, 16b befestigt. Durch die schrägen Flächen 17a, 17b der Justierelemente 16a, 16b die sich bis in den Randbereich des Mantels 5 des Lichtwellenleiters erstrecken, wird beim Zusammenfügen von Membran 11 und Lichtwellenleiter 2 der Lichtwellenleiter 2 auf einfache Weise zentriert.

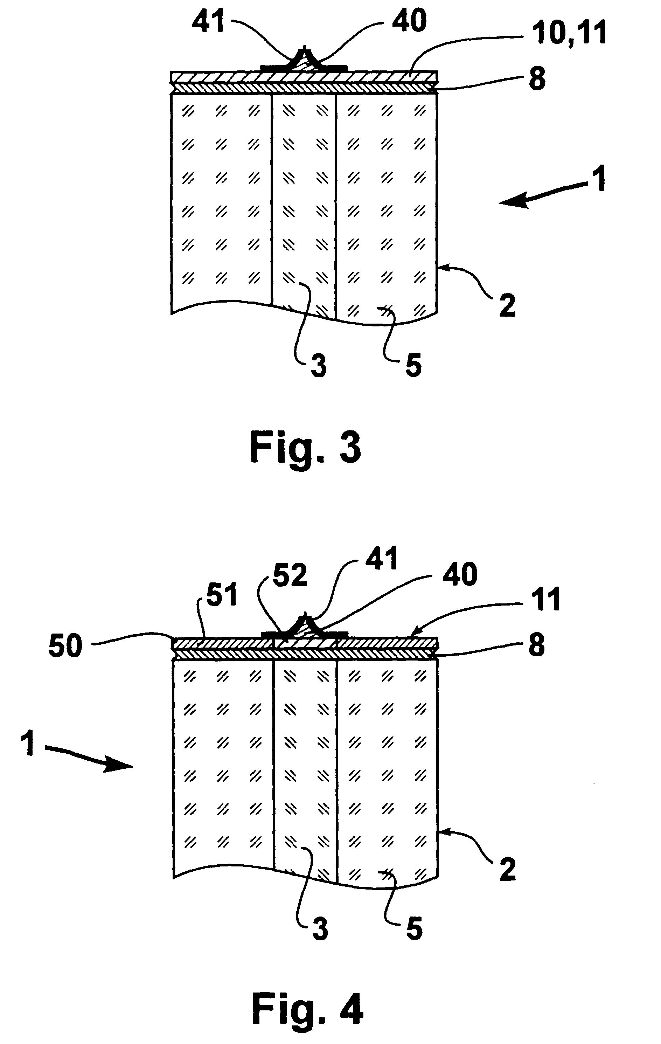

Nach dem Verkleben werden die Seitenteile 15a, 15b mit den Justierelementen 16a, 16b abgetrennt und es wird die in der Figur 3 gezeigte Nahfeldsonde 1 erhalten. Die Membran 11 steht gegenüber dem Lichtwellenleiter 2 nicht nach außen vor, so daß die Winkelfreiheit der Nahfeldsonde 1 nicht beeinträchtigt wird.

In den Figuren 4 bis 6 sind weitere Ausführungsformen der Nahfeldsonde 1 dargestellt. Gemäß der Figur 4 besteht die Membran 11 aus einer Schicht 50, die zwei Materialien aufweist. Im Zentrum der Schicht 50 befindet sich das transparente Innenmaterial 52, das von einem Außenmaterial 51 umgeben ist. In der hier gezeigten Ausführungsform entspricht die Abmessung des Innenmaterials der Abmessung des Kernmaterials 3 des Lichtwellenleiters 2. Die Materialien 51 und 52 können entsprechend dem Aufbau des Lichtwellenleiters 2 aus einem Kern und einem Mantelmaterial bestehen. Eine weitere Möglichkeit besteht darin, daß das Material 52 transparent und das Außenmaterial 51 nichttransparent ist.

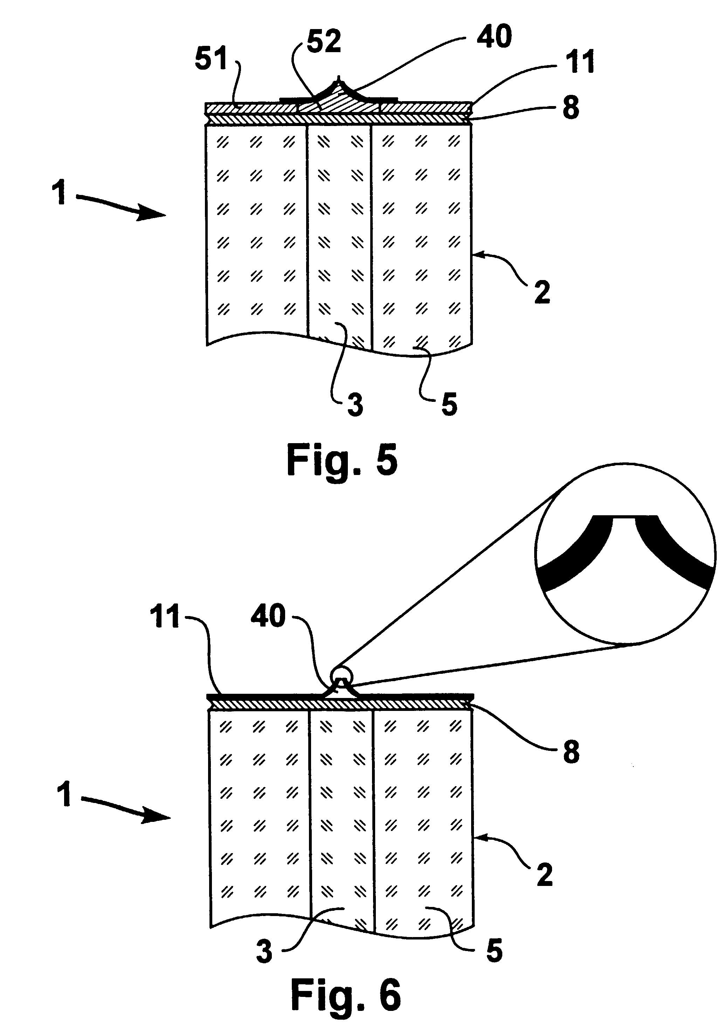

In der Figur 5 ist eine Ausführungsform dargestellt, bei der das Kernmaterial 52 integraler Bestandteil der Spitze 40 ist. Spitze 40 und Kernmaterial 52 bestehen somit aus demselben Material. Der Durchmesser des Innenmaterials 52 ist etwas größer als der Durchmesser des Kernmaterials 3 des Lichtwellenleiters 2.

In der Figur 6 ist eine Ausführungsform dargestellt, bei der Membran 11 und Spitze 40 als integrales Bauteil ausgebildet sind. Es handelt sich hierbei um ein Material, das für die verwendete Wellenlänge in der Nahfeldsonde nicht transparent ist. Vorzugsweise wird eine Metallmembran 11 verwendet, in die ein Loch unter gleichzeitiger Ausstülpung des Membranmaterials eingebracht wird. Auf diese Weise wird eine Spitze 40 gebildet, die entweder hohl oder mit einem transparenten Material ausgefüllt ist.

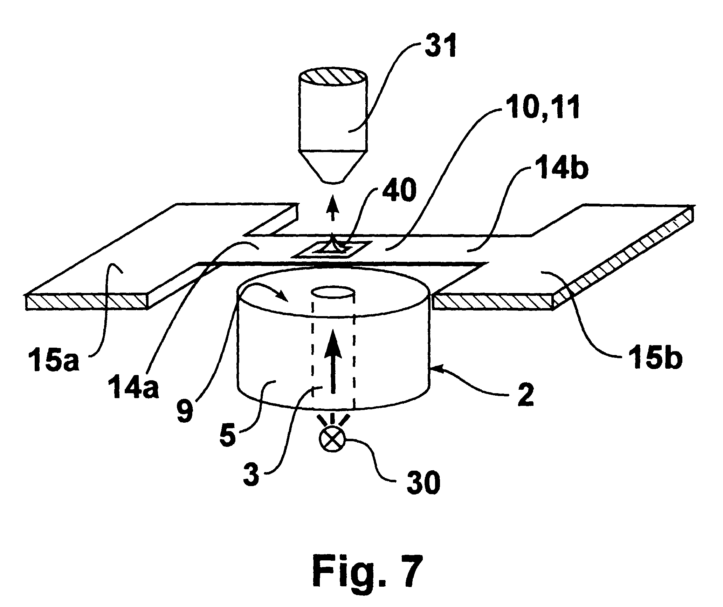

In der Figur 7 wird die Justierung der Spitze 40 über dem Kern 3 des Lichtwellenleiters 2 mittels eines optischen Verfahrens veranschaulicht. Über der Lichtaustrittsfläche 9 des Lichtwellenleiters 2 ist eine Membran 11 beabstandet angeordnet, die anstelle eines runden Mittelteils 18 einen rechteckigen Mittelteil aufweist, der unmittelbar in die Stege 14a,b übergeht, an denen die Seitenteile 15a,b angeformt sind. Auf der Oberseite der Membran 11 ist die Spitze 40 befestigt, die eine pyramidenförmige Gestalt aufweist. An den Seitenteilen 15a,b wird die Membran 11 erfaßt und kann in zwei Richtungen in der Membranebene verschoben werden. Unterhalb des Lichtwellenleiters 2 ist eine Beleuchtungseinrichtung 30 angeordnet, die Licht in das Kernmaterial 3 des Lichtwellenleiters 2 einstrahlt. Von der Spitze 40 wird nur ein geringer Teil des aus der Lichtaustrittsfläche 9 austretenden Lichtes durchgelassen, das von einer Nachweiseinrichtung oberhalb der Spitze 40 ausgewertet wird. Von dieser Nachweiseinrichtung ist in der Figur 7 lediglich ein Mikroskopobjektiv 31 dargestellt. Wenn sich die Spitze in der vorgesehenen Position im Zentrum über dem Kern 3 des Lichtwellenleiters 2 befindet, wird die gemessene Intensität maximal. Es kann somit über die Intensitätsauswertung die Justierung der Spitze 40 vorgenommen werden. Nachdem die optimale Position erreicht worden ist, wird der Klebstoff auf die Lichtaustrittsfläche 9 aufgetragen und die Membran 11 mit dem Lichtwellenleiter 2 verbunden.

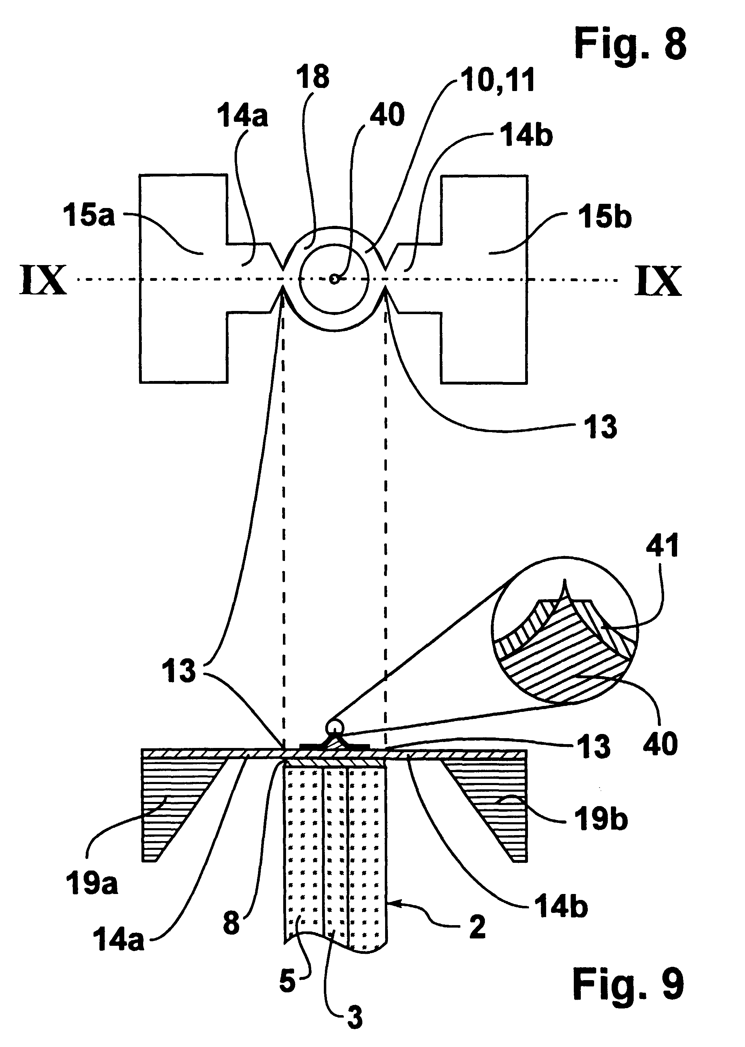

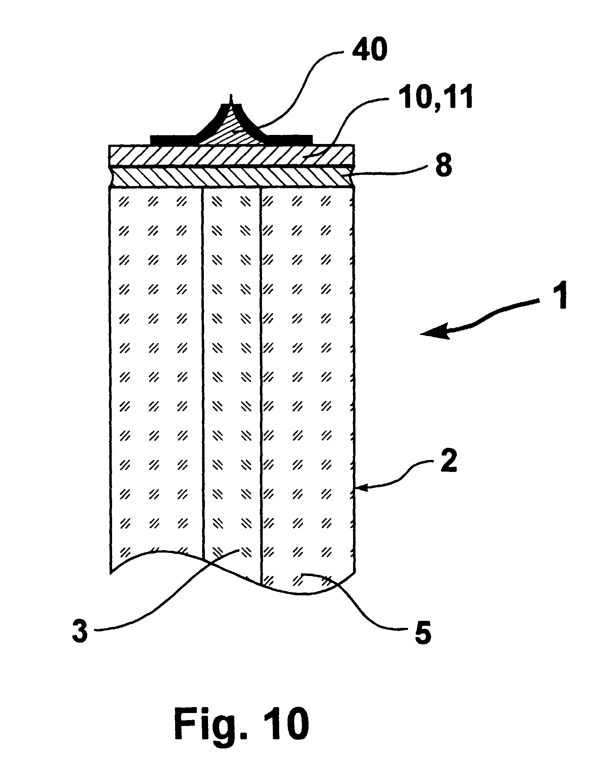

In den Figuren 8 bis 10 ist eine weitere Ausführungsform der Membran 11 dargestellt, wobei die Figur 9 einen Schnitt längs der Linie IX-IX der in Figur 8 gezeigten Anordnung veranschaulicht. Das Mittelteil 18 der Membran 11 besitzt denselben Durchmesser wie der Lichtwellenleiter 2, wobei zwischen dem Mittelteil 18 und dem Steg 14a,b Sollbruchstellen 13 vorgesehen sind. Nach dem Befestigen des Mittelteils 18 auf der Lichtaustrittsfläche 9 des Lichtwellenleiters 2 mittels einer Klebstoffschicht 8 werden die Stege 14a mit dem Seitenteil 15a bzw. 14b mit dem Seitenteil 15b an der Sollbruchstelle 13 abgetrennt. Die Elemente 19a,b dienen bei dieser Ausführungsform nicht der Justierung sondern nur der Verbesserung der Handhabung. Die fertige Nahfeldsonde 1 ist in der Figur 10 zu sehen.

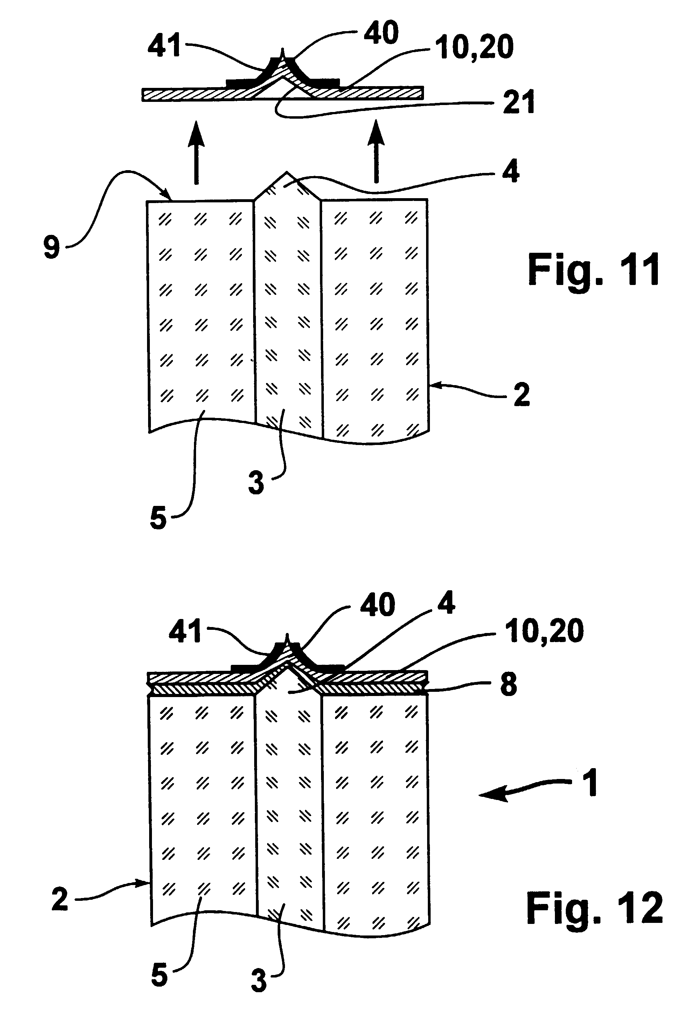

In den Figuren 11 und 12 ist eine Ausführungsform mit Justierelementen dargestellt. Das Trägerelement 10 besteht aus einer Membran 20, die integraler Bestandteil der Spitze 40 ist. Im Zentrum der Membran 20 ist eine kegelförmige Vertiefung 21 eingeformt, die sich bis in das Innere der Spitze 40 erstreckt. Ein entsprechendes Gegenstück in Form einer Kernspitze 4 ist auf der Stirnseite 9 des Lichtwellenleiters 2 ausgebildet. Die Kernspitze 4 wird vorzugsweise durch Ätzen hergestellt. Wie in der Figur 12 zu sehen ist, ist der Kegelwinkel der Vertiefung 21 etwas größer als der Kegelwinkel der Kernspitze 4, wodurch die Zentrierung der Membran 20 auf dem Lichtwellenleiter 2 erleichtert wird.

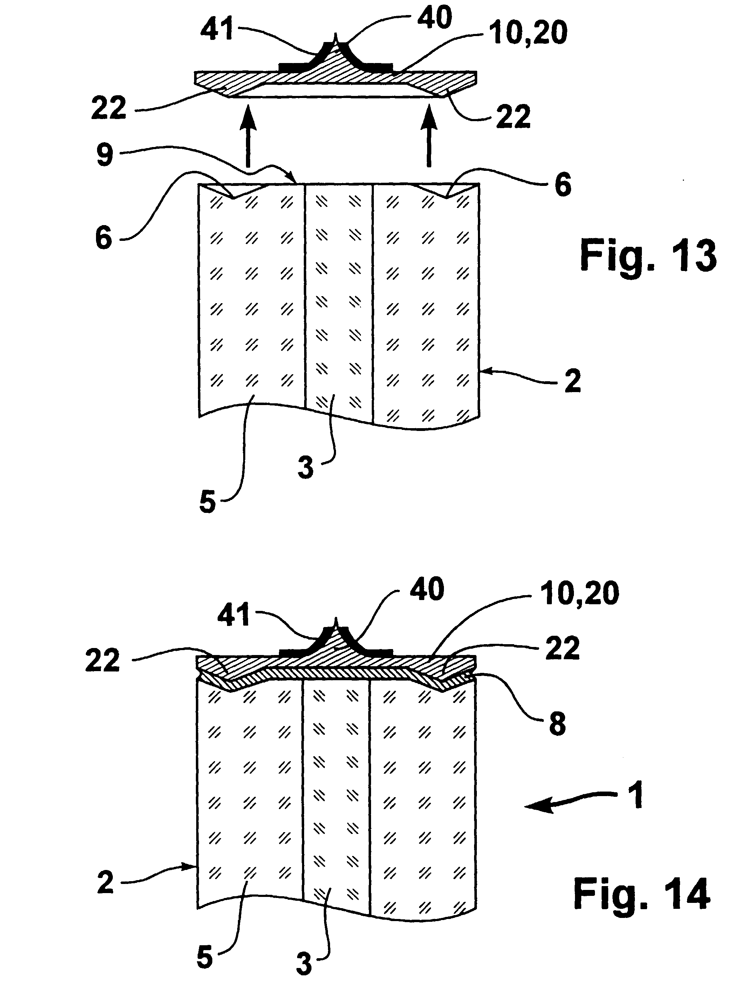

In den Figuren 13 und 14 ist eine weitere Ausführungsform dargestellt, wobei die Membran 20 ebenfalls integraler Bestandteil der Spitze 40 ist. An der Unterseite der Membran 20 ist im Randbereich ein ringförmiger Vorsprung 22 mit dreieckigem Querschnitt vorgesehen, der in eine entsprechende ringförmige Vertiefung 6 im Bereich des Mantelmaterials 5 des Lichtwellenleiters 2 eingreift. Die aufgeklebte Membran 20 ist in der Figur 14 zu sehen.

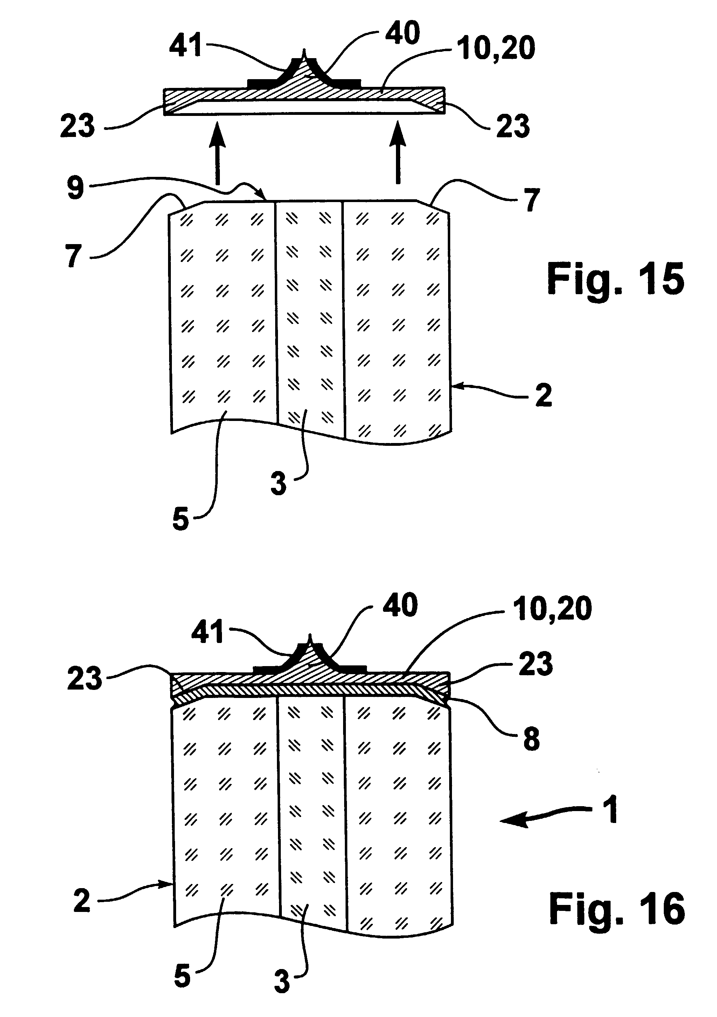

In der Figur 15 ist ebenfalls eine Membran 20 als integraler Bestandteil der Spitze 40 zu sehen, die im äußeren Randbereich einen ringförmigen Vorsprung 23 aufweist, der mit der abgeschrägten Fläche 7 des Lichtwellenleiters 2 zusammenwirkt. Diese abgeschrägte Fläche 7 wird durch Polieren hergestellt. Die fertige Nahfeldspitze 1 ist in der Figur 16 zu sehen.

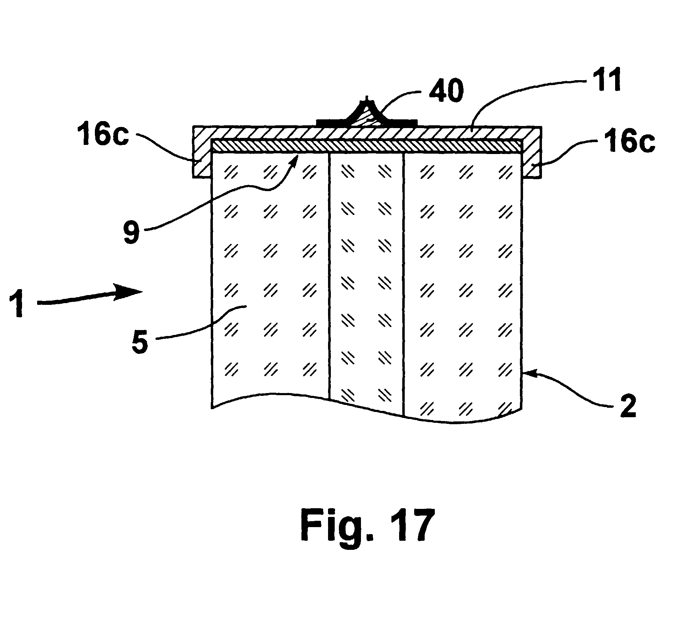

In der Figur 17 ist eine Nahfeldsonde 1 dargestellt, bei der die Membran 11 in Teilbereichen gegenüber der Lichtaustrittsfläche 9 vorsteht und an der Unterseite bogenförmige Justierelemente 16c aufweist, die die Außenseite des Mantelmaterials 5 teilweise umgreifen.

### Bezugszeichenliste:

- 1: Nahfeldsonde
- 2: Lichtwellenleiter
- 3: Kern
- 4: Kernspitze
- 5: Mantel
- 6a,b: Justiervertiefung
- 7a,b: abgeschrägte Kante
- 8: Klebstoffschicht
- 9: Lichtaustrittsfläche
- 10: Trägerelement
- 11: Membran
- 12: Abrißstelle
- 13: Sollbruchstelle
- 14a,b: Membransteg
- 15a,b: Seitenteil
- 16a,b,c,: Justierelement
- 17a,b: schräge Fläche
- 18: Mittelteil der Membran
- 19a,b: Element
- 20: Membran als integrierte Haltestruktur
- 21: Vertiefung
- 22a,b: Justiervorsprung
- 23a,b: Justiervorsprung
- 30: Beleuchtungseinrichtung
- 31: Mikroskopobjektiv
- 40: Spitze
- 41: metallische Beschichtung
- 50: Schicht
- 51: Außenmaterial
- 52: Innenmaterial

## Patentansprüche

1. Optische Nahfeldsonde mit einem Lichtwellenleiter aus festem Material und mikrotechnisch hergestellter Spitze, die an einem Trägerelement befestigt ist, dadurch gekennzeichnet,
daß das Trägerelement (10) lediglich eine mindestens im Bereich der Spitze (40) transparente oder mit einem Loch versehene Membran (11,20) aufweist, die auf die Lichtaustrittsfläche (9) des Lichtwellenleiters (2) aufgebracht ist, wobei die Abmessungen der Membran (11,20) mindestens in einer Richtung in der Membranebene kleiner gleich dem Durchmesser des Lichtwellenleiters (2) sind.

2. Nahfeldsonde nach Anspruch 1, dadurch gekennzeichnet, daß die Membran (11,20) aus mindestens einer Schicht (50) besteht.

3. Nahfeldsonde nach Anspruch 2, dadurch gekennzeichnet, daß die Schicht (50) ein in dem Bereich, der dem Lichtwellenleiterkern zugeordnet ist angeordnetes transparentes Innenmaterial (52) aufweist, das von einem Außenmaterial (51) umgeben ist.

4. Nachfeldsonde nach Anspruch 3, dadurch gekennzeichnet, daß das Innenmaterial (52) und das Außenmaterial (51) entsprechend dem Lichtwellenleiter (2) aus einem Kernmaterial (52) und einem Mantelmaterial (51) besteht.

5. Nahfeldsonde nach Anspruch 3, dadurch gekennzeichnet, daß das Außenmaterial (51) nicht transparent ist.

6. Nahfeldsonde nach Anspruch 3, dadurch gekennzeichnet, daß das Innenmaterial (52) integraler Bestandteil der Spitze (40) ist.

7. Nahfeldsonde nach einem der Ansprüche 1 oder 2, dadurch gekennzeichnet, daß die gesamte Membran (20) integraler Bestandteil der Spitze (40) ist.

8. Nahfeldsonde nach einem der Ansprüche 1 bis 7, dadurch gekennzeichnet, daß die Membran (11,20) und/oder der Lichtwellenleiter (2) Justierelemente (4, 6, 7, 16a,b,c, 21, 22, 23) zum Justieren der Spitze (40) auf dem Lichtwellenleiter (2) aufweist.

9. Nahfeldsonde nach einem der Ansprüche 1 bis 8, dadurch gekennzeichnet, daß die Membran (11,20) an der der Spitze (40) abgewandten Seite mindestens eine Vertiefung (21) und/oder mindestens einen Vorsprung (22, 23) aufweist, der mit entsprechenden Justierelementen (6, 7) des Lichtwellenleiters (2) zusammenwirkt.

10. Nahfeldsonde nach Anspruch 9, dadurch gekennzeichnet, daß die Vertiefung (21) sich bis in das Innere der Spitze (40) erstreckt.

11. Nahfeldsonde nach einem der Ansprüche 1 bis 10, dadurch gekennzeichnet, daß die Membran (11,20) durch eine transparente Klebstoffschicht (8) mit der Lichtaustrittsfläche (9) des Lichtwellenleiters (2) verbunden ist.

12. Nahfeldsonde nach Anspruch 11, dadurch gekennzeichnet, daß der Klebstoff ein Adhäsionsklebstoff ist.

13. Nahfeldsonde nach einem der Ansprüche 1 bis 12, dadurch gekennzeichnet, daß der Lichtwellenleiter (2) eine Glasfaser oder eine Polymerfaser ist.

14. Verfahren zur Herstellung einer optischen Nahfeldsonde mit Lichtwellenleiter und Spitze, dadurch gekennzeichnet,
daß ein Lichtwellenleiter aus festem Material verwendet wird,
daß mikrotechnisch die Spitze auf einer Membran oder zusammen mit der Membran als integrale Einheit hergestellt wird und daß die Membran mit der Spitze über der Lichtaustrittsfläche des Lichtwellenleiters justiert und anschließend auf der Lichtaustrittsfläche aufgebracht wird, wobei die Abmessungen der Membran mindestens in einer Richtung in der Membranebene kleiner gleich dem Durchmesser des Lichtwellenleiters sind.

15. Verfahren nach Anspruch 14, dadurch gekennzeichnet, daß zur Justierung der Einheit aus Spitze und Membran Licht in den Lichtwellenleiter eingestrahlt wird und über der Spitze die Intensität des durch die Spitze hindurchtretenden Lichtes gemessen wird, anhand derer die Einheit bezüglich des Kerns des Lichtwellenleiters zentriert wird.

16. Verfahren nach Anspruch 14, dadurch gekennzeichnet, daß die Justierung der Einheit aus Spitze und Membran mittels eines über der Spitze angeordneten Bildverarbeitungssystems vorgenommen wird.

17. Verfahren nach einem der Ansprüche 14 bis 16, dadurch gekennzeichnet, daß eine Membran mit Membranstegen verwendet wird, die mindestens eine Abriß- oder Sollbruchstelle aufweisen, an der nach dem Befestigen auf der Lichtaustrittsfläche des Lichtwellenleiters die Membran von überstehenden Bestandteilen der Membran getrennt wird.

18. Verfahren nach einem der Ansprüche 14 bis 17, dadurch gekennzeichnet, daß der Lichtwellenleiter an der Lichtaustrittsfläche zur Herstellung von mindestens einem Vorsprung und/oder einer Vertiefung geätzt wird und daß bei der Herstellung der Membran eine entsprechende Vertiefung eingeformt und/oder ein entsprechender Vorsprung angeformt wird, die beim Zusammenfügen von Membran und Lichtwellenleiter zur Positionierung der Spitze zusammenwirken.

19. Verfahren nach einem der Ansprüche 14 bis 18, dadurch gekennzeichnet, daß die Membran auf den Lichtwellenleiter aufgeklebt wird.

20. Verfahren nach einem der Ansprüche 14 bis 18, dadurch gekennzeichnet, daß die Membran auf die Lichtaustrittsfläche des Lichtwellenleiters aufgelegt und dort von Adhäsionskräften gehalten wird.

21. Verfahren nach einem der Ansprüche 14 bis 20, dadurch gekennzeichnet, daß als Lichtwellenleiter eine Glasfaser oder eine Polymerfaser verwendet wird.

22. Verfahren nach einem der Ansprüche 14 bis 21, dadurch gekennzeichnet, daß eine Membran aus einem Polymerwerkstoff verwendet wird, daß der Lichtwellenleiter auf eine Temperatur oberhalb des Erweichungspunktes des Polymerwerkstoffes erwärmt wird und daß anschließend die Membran auf die Oberfläche des Lichtwellenleiters aufgelegt wird.

## Claims

1. Optical near-field probe having an optical waveguide made from rigid material and tip produced by micro-engineering, which is attached to a support element, characterised in that the support element (10) has only one membrane (11, 20) which is transparent at least in the region of the tip (40) or provided with a hole, and is attached to the light emission surface (9) of the optical waveguide (2), wherein the dimensions of the membrane (11, 20) are smaller or equal to the diameter of the optical waveguide (2) at least in one direction in the plane of the membrane.

2. Near-field probe according to claim 1, characterised in that the membrane (11, 20) consists of at least one layer (50).

3. Near-field probe according to claim 2, characterised in that the layer (50) has a transparent inner material arranged in the region which is assigned to the optical waveguide core and is surrounded by an outer material (51).

4. Near-field probe according to claim 3, characterised in that the inner material (52) and the outer material (51) consists of a core material (52) and a shell material (51) corresponding to the optical waveguide (2).

5. Near-field probe according to claim 3, characterised in that the outer material (51) is not transparent.

6. Near-field probe according to claim 3, characterised in that the inner material (52) is an integral component of the tip (40).

7. Near-field probe according to one of claims 1 or 2, characterised in that the overall membrane (20) is an integral component of the tip (40).

8. Near-field probe according to one of claims 1 to 7, characterised in that the membrane (11, 20) and/or the optical waveguide (2) has adjusting elements (4, 6, 7, 16a,b,c, 21, 22, 23) for adjusting the tip (40) on the optical waveguide (2).

9. Near-field probe according to one of claims 1 to 8, characterised in that the membrane (11, 20) has at least one depression (21) and/or at least one projection (22, 23), which cooperates with corresponding adjusting elements (6, 7) of the optical waveguide (2), on the side facing away from the tip (40).

10. Near-field probe according to claim 9, characterised in that the depression (21) extends into the interior of the tip (40).

11. Near-field probe according to one of claims 1 to 10, characterised in that the membrane (11, 20) is connected to the light emission surface (9) of the optical waveguide (2) by means of a transparent adhesive layer (8).

12. Near-field probe according to claim 11, characterised in that the adhesive is a pressure adhesive.

13. Near-field probe according to one of claims 1 to 12, characterised in that the optical waveguide (2) is a glass fibre or a polymer fibre.

14. Process for producing an optical near-field probe having optical waveguide and tip, characterised in that an optical waveguide made from rigid material is used, in that the tip is produced by micro-engineering on a membrane or together with the membrane as an integral unit, and in that the membrane with the tip is adjusted via the light emission surface of the optical waveguide and then applied to the light emission surface, wherein the dimensions of the membrane are smaller or equal to the diameter of the optical waveguide at least in one direction in the plane of the membrane.

15. Process according to claim 14, characterised in that to adjust the unit comprising tip and membrane, light is irradiated into the optical waveguide and the intensity of the light passing through the tip is measured via the tip, by means of which the unit is centered with respect to the core of the optical waveguide.

16. Process according to claim 14, characterised in that adjusting the unit comprising tip and membrane is carried out by means of an image processing system arranged above the tip.

17. Process according to one of claims 14 to 16, characterised in that a membrane with membrane strips is used, which have at least one tear or theoretical break point, at which the membrane is separated from projecting components of the membrane after attaching to the light emission surface of the optical waveguide.

18. Process according to one of claims 14 to 17, characterised in that the optical waveguide is etched on the light emission surface to produce at least one projection and/or one depression, and in that when producing the membrane a corresponding depression is formed and/or a corresponding projection is moulded on, which cooperate when assembling membrane and optical waveguide to position the tip.

19. Process according to one of claims 14 to 18, characterised in that the membrane is adhered to the optical waveguide.

20. Process according to one of claims 14 to 18, characterised in that the membrane is placed on the light emission surface of the optical waveguide and held there by adhesive forces.

21. Process according to one of claims 14 to 20, characterised in that a glass fibre or a polymer fibre is used as optical waveguide.

22. Process according to one of claims 14 to 21, characterised in that a membrane made from a polymer material is used, in that the optical waveguide is heated to a temperature above the softening point of the polymer material and in that then the membrane is placed on the surface of the optical waveguide.

## Revendications

1. Sonde optique de champ proche ayant un guide d'ondes lumineuses d'un matériau solide et une pointe de fabrication microtechnique, qui est fixée à un élément support, caractérisée en ce que,
l'élément support (10) comprend uniquement un diaphragme (11,20) transparent ou pourvu d'un trou au moins dans la zone de la pointe (40), qui est monté sur la surface de sortie de la lumière (9) du guide d'ondes lumineuses (2), les dimensions du diaphragme (11,20) étant, au moins dans une direction dans le plan du diaphragme, inférieures ou égales au diamètre du guide d'ondes lumineuses (2).

2. Sonde de champ proche selon la revendication 1, caractérisée en ce que le diaphragme (11,20) est constitué d'au moins une couche (50).

3. Sonde de champ proche selon la revendication 2, caractérisée en ce que la couche (50) comprend un matériau intérieur (52) transparent disposé dans la zone qui correspond au noyau du guide d'ondes lumineuses, lequel matériau est entouré d'un matériau externe (51).

4. Sonde de champ proche selon la revendication 3, caractérisée en ce que le matériau intérieur (52) et le matériau extérieur (51) correspondant au guide d'ondes lumineuses (2) se composent respectivement d'un matériau de noyau (52) et d'un matériau d'enveloppe (51).

5. Sonde de champ proche selon la revendication 3, caractérisée en ce que le matériau extérieur (51) n'est pas transparent.

6. Sonde de champ proche selon la revendication 3, caractérisée en ce que le matériau intérieur (52) fait partie intégrante de la pointe (40).

7. Sonde de champ proche selon l'une des revendications 1 ou 2, caractérisée en ce que tout le diaphragme (20) fait partie intégrante de la pointe (40).

8. Sonde de champ proche selon l'une quelconque des revendications 1 à 7, caractérisée en ce que le diaphragme (11,20) et/ou le guide d'ondes lumineuses (2) comprennent des éléments d'ajustement (4, 6, 7, 16a, 16b, 16c, 21, 22, 23) pour ajuster la pointe (40) sur le guide d'ondes lumineuses (2).

9. Sonde de champ proche selon l'une quelconque des revendications 1 à 8, caractérisée en ce que le diaphragme (11,20) comprend au moins un creux (21) et/ou au moins une saillie (22,23) au niveau du côté opposé à la pointe (40), qui s'engage avec des éléments d'ajustement correspondants (6,7) du guide d'ondes lumineuses (2).

10. Sonde de champ proche selon la revendication 9, caractérisée en ce que le creux (21) se prolonge jusqu'à l'intérieur de la pointe (40).

11. Sonde de champ proche selon l'une quelconque des revendications 1 à 10, caractérisée en ce que le diaphragme (11,20) est lié à la surface de sortie de la lumière (9) du guide d'ondes lumineuses (2) par une couche de colle transparente (8).

12. Sonde de champ proche selon la revendication 11, caractérisée en ce que la colle est une colle adhérente.

13. Sonde de champ proche selon l'une quelconque des revendications 1 à 12, caractérisée en ce que le guide d'ondes lumineuses (2) est une fibre de verre ou une fibre polymère.

14. Procédé pour la fabrication d'une sonde optique de champ proche ayant un guide d'ondes lumineuses et une pointe, caractérisé en ce qu'un guide d'ondes lumineuses d'un matériau solide est utilisé, que la pointe sur un diaphragme ou conjointement avec le diaphragme en formant une unité entière est de fabrication microtechnique et que le diaphragme avec la pointe est ajusté au-dessus de la surface de sortie de la lumière du guide d'ondes lumineuses et monté ensuite sur la surface de sortie de la lumière, les dimensions du diaphragme étant inférieures ou égales au diamètre du guide d'ondes lumineuses au moins dans une direction dans le plan du diaphragme.

15. Procédé selon la revendication 14, caractérisé en ce que de la lumière est rayonnée dans le guide d'ondes lumineuses afin d'ajuster l'unité constituée de la pointe et du diaphragme et que l'intensité de la lumière pénétrant à travers la pointe est mesurée au-dessus de la pointe, ce qui permet de centrer l'unité par rapport au noyau du guide d'ondes lumineuses.

16. Procédé selon la revendication 14, caractérisé en ce que l'on procède à l'ajustement de l'unité constituée de la pointe et du diaphragme au moyen d'un système de traitement d'images disposé au-dessus de la pointe.

17. Procédé selon l'une quelconque des revendications 14 à 16, caractérisé en ce qu'un diaphragme avec des nervures de diaphragme est utilisé, lesquelles comprennent au moins une position destinée à la rupture ou à l'arrachage, au niveau de laquelle, après la fixation du guide d'ondes lumineuses sur la surface de sortie de lumière, le diaphragme est séparé des éléments faisant saillie du diaphragme.

18. Procédé selon l'une quelconque des revendications 14 à 17, caractérisé en ce que le guide d'ondes lumineuses est attaqué chimiquement au niveau de la surface de sortie de la lumière afin de produire au moins une saillie et/ou un creux et que, lors de la fabrication de le diaphragme, un creux correspondant est façonné dans celui-ci et/ou une saillie correspondant est façonnée sur celui-ci, qui s'engagent afin de positionner la pointe lors de l'assemblage du diaphragme et du guide d'ondes lumineuses.

19. Procédé selon l'une quelconque des revendications 14 à 18, caractérisé en ce que le diaphragme est collé sur le guide d'ondes lumineuses.

20. Procédé selon l'une quelconque des revendications 14 à 18, caractérisé en ce que le diaphragme est posé sur la surface de sortie de la lumière du guide d'ondes lumineuses et y est maintenu par des forces d'adhérence.

21. Procédé selon l'une quelconque des revendications 14 à 20, caractérisé en ce qu'une fibre de verre ou une fibre polymère sont utilisées comme guide d'ondes lumineuses.

22. Procédé selon l'une quelconque des revendications 14 à 21, caractérisé en ce qu'un diaphragme constitué d'un matériau polymère est utilisé, en ce que le guide d'ondes lumineuses est chauffé à une température supérieure au point de ramollissement du matériau polymère et qu'ensuite le diaphragme est posé sur la surface du guide d'ondes lumineuses.
